# EUROPEAN PATENT SPECIFICATION

(11) **EP 1 745 636 B1**
(45) Date of publication and mention of the grant of the patent: **18.07.2007**
(21) Application number: 05747214.4
(22) Date of filing: 13.05.2005
(51) Int. Cl.: H04M 1/02, H04B 1/38

(54) **MOBILE TELEPHONE HANDSET WITH CAPACITIVE RADIO FREQUENCY PATH BETWEEN FIRST AND SECOND CONDUCTIVE COMPONENTS THEREOF**
MOBILTELEFON-HANDAPPARAT MIT EINEM KAPAZITIVEN HOCHFREQUENZWEG ZWISCHEN EINER ERSTEN UND EINER ZWEITEN LEITFÄHIGEN KOMPONENTE DAVON
APPAREIL TELEPHONIQUE MOBILE AVEC CIRCUIT RADIOELECTRIQUE CAPACITIF ENTRE UN PREMIER ET UN SECOND COMPOSANT DE CET APPAREIL

(30) Priority: 14.05.2004 GB 0410760
(43) Date of publication of application: 24.01.2007
(73) Proprietor: ANTENOVA LIMITED, Cambridge CB5 9AR (GB)
(72) Inventor: COLLINS, Brian, Stow-cum-Quy, Cambridge CB5 9AR (GB)
(74) Representative: Harrison Goddard Foote
(86) International application number: PCT/GB2005/001840
(87) International publication number: WO 2005/112405

(56) References cited:
- EP-A- 0 622 864
- US-A1- 2004 027 296

## Description

The present invention relates to a mobile telephone handset, and in particular to a handset comprising two parts that slide relative to each other when a user converts the handset between an "open" and a "closed" configuration.

Handsets for mobile telephone systems are manufactured in a number of different physical configurations. These include single rigid 'bar-phones', folding or 'clamshell' phones and two-piece 'slider phones'. The present invention relates to slider phones. It will be appreciated that the term 'slider phones' encompasses both the type of handset where the two parts slide laterally with respect to each other, as well as those types where one part twists relative to the other in a plane generally parallel thereto, these types sometime being known as 'swing phones'.

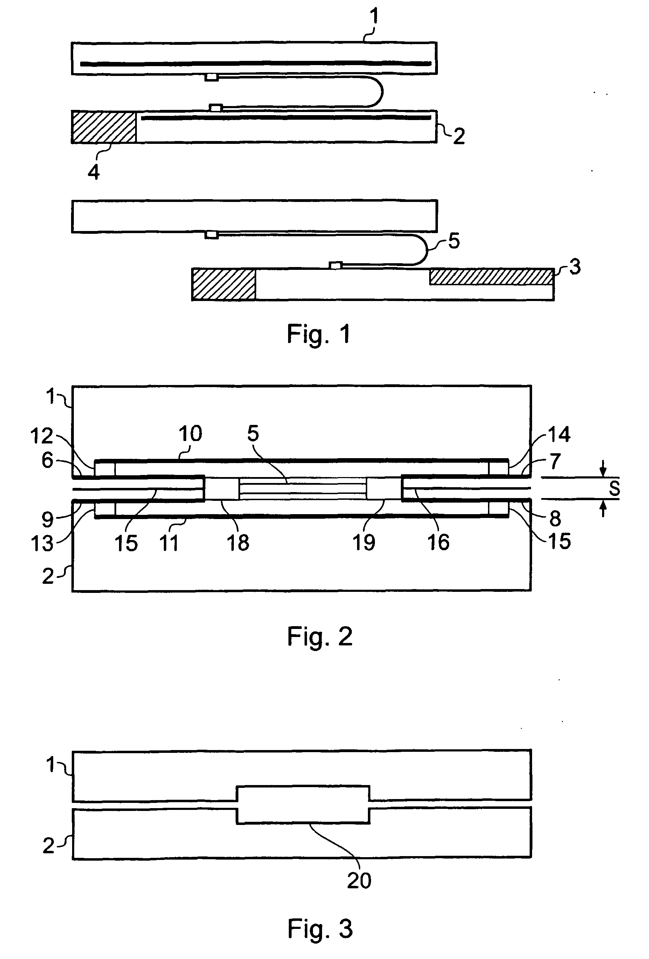

A typical slider phone handset is shown in Figure 1.

With reference to Figure 1, the handset comprises a first component (1) typically containing the display (3), and a second component (2) typically containing the keypad and many of the electronic circuits required to provide the functionality of the handset. When in the closed configuration, the keypad is protected by the first component of the handset.

An antenna (4) is typically located at the end of the second component where it may be located externally or within the second component. The two components of the handset are typically connected by a connection means (5), typically a flexible printed circuit which carries a large number of conductors whose function is to control the display and other devices on the first component of the handset.

A limitation of this design is that when the antenna is driven by the output of the handset, radio frequency currents are caused to flow in the connection means. These currents contribute little to the signal radiated from the handset and contribute only to loss in the resistance of the interconnecting conductors. The input impedance of the antenna varies substantially between the open and closed configurations of the handset.

In the example of Figure 1, the connection means may accommodate typically between 30 and 50 individual conductor traces (printed circuit conductors), including some traces whose function is to interconnect the groundplanes of the two components of the handset. The connection means is typically between 50mm and 80mm long. Each individual conductor has substantial resistance and inductance, and a capacitance exists between the conductors and the faces of the components of the handset.

For practical mechanical reasons, it is not generally possible to incorporate a wide, low-resistance ground conductor into the connection means. This is because the spacing between the two components of the handset is small, and a flexible printed circuit with a wide copper conductor is not sufficiently flexible to be accommodated within the spacing. Moreover, repeated flexing of the wide copper conductor as the handset is opened and closed will lead to cracking and failure.

In order to mitigate the effects of the interconnecting connections it is necessary either to prevent the flow of RF currents between the handset components, or to ensure that the currents are provided with an alternative current path and do not flow through the lossy interconnections described above.

It is known from EP 0 622 864 (Casio) to provide a rigid 'bar-phone' or a 'clamshell' phone including first and second metal housings with an antenna mounted on the first housing, and a conductive electrical connection between components housed in the first housing with components housed in the second housing. A discrete control element is provided between the first and second metal housings so as to control a distribution of high frequency currents flowing through the first and second housings. The control element, which is in the form of a small chip, includes one or more of a resistor, a capacitor, a coil and/or a diode, and is connected by wire between the first and second housings. By varying the impedance of the control element, it is possible to vary the characteristics of the antenna mounted on the first housing. This is because varying the impedance of the control element serves to control the distribution of the high frequency currents flowing in the housings, which generate electromagnetic fields that can interfere with the performance of the antenna. This arrangement does not seek to control high frequency currents from interfering with currents flowing in the conductive electrical connection. Indeed, the conductive electrical connection is specifically designed so that the first and second housings are not shortcircuited thereby. This arrangement is not possible in handsets where groundplanes housed in first and second housings are interconnected with each other.

Embodiments of the present invention relate to means whereby a low-impedance capacitive current path can be provided between the handset components, reducing the level of radio frequency currents that flow in the interconnecting conductors and thereby reducing associated losses and improving the stability of the performance of the antenna when the handset is opened and closed. At the same time, an impedance of the alternative path through the interconnecting conductors may be increased.

According to the present invention, there is provided a mobile telephone handset having a casing comprising first and second components that slide relative to each other between a closed and an open configuration of the handset, wherein the first and second components are interconnected by an electrically conductive connector, and wherein facing surfaces of the first and second components are provided with electrically conductive surfaces or coatings that define an additional capacitive radio frequency path between the first and second components.

In one embodiment of the invention, facing surfaces of the two components are provided with electrically conductive surfaces or coatings (e.g. metallised paint) on their outer, respectively proximate faces. An insulating coating or lamina is preferably placed between the facing surfaces to avoid possible physical contact which might cause electrical noise or physical damage to the coatings.

Alternatively or in addition, the conductive surface or coating may be provided inside one or both components of the handset, for example on inner sides of the facing surfaces. In this embodiment, an additional insulating layer need not be provided, since the conductive surfaces cannot electrically contact each other.

The conductive surface or coating is advantageously not provided in the region of the interconnecting electrically conductive connector, thereby helping to reduce or minimise the capacitance between the circuit traces and the coating. This ensures that the impedance presented at the ends of the interconnections is as high as possible compared with the low impedance of the capacitive path provided directly between the facing surfaces of the components.

Advantageously, each of the conductive surfaces or coatings is electrically grounded, for example by way of a connection to an electrical groundplane or ground connector provided for circuit components in the handset.

The conductive surfaces or coatings may be provided on spaced apart regions of each handset component, and may be located on either side of a central sliding mechanism.

For a better understanding of the present invention and to show how it may be carried into effect, reference shall now be made by way of example to the accompanying drawings, in which:
FIGURE 1 shows a slider-type telephone handset in closed and open configurations;
FIGURE 2 shows a slider-type telephone handset of an embodiment of the present invention;
FIGURE 3 shows a possible modification to the embodiment of Figure 2;
FIGURE 4 shows return loss results for a first antenna fitted to an embodiment of the present invention;
FIGURE 5 shows return loss results for a second antenna fitted to an embodiment of the present invention;
FIGURE 6 shows return loss results for a third antenna fitted to an embodiment of the present invention;
FIGURE 7 shows measured terminal efficiencies for the first antenna fitted to an embodiment of the present invention;
FIGURE 8 shows measured terminal efficiencies for the second antenna fitted to an embodiment of the present invention;
FIGURE 9 shows measured terminal efficiencies for the third antenna fitted to an embodiment of the present invention; and
FIGURE 10 shows a comparison of return loss for an embodiment of the invention with the electrically conductive connector respectively connected and disconnected to a printed circuit board in one of the handset components.

The invention is described by reference to Figure 2 which is a view from an end of the handset. As in Figure 1, the two components of the handset and its enclosing case mouldings are referred to for convenience as 'upper' 1, and 'lower' 2. The interconnecting flexible circuit 5 lies in the centre of the region between the handset components and is looped in the same manner as that of Figure 1, allowing longitudinal axial motion of the components as before.

Regions of both upper 1 and lower 2 case moulding outside the area occupied by the flexible circuit 5 are made of conducting material or are coated with a conductive coating 6, 7, 8, 9. This conductive surface is preferably applied on both the inside and the outside of the case mouldings. The faces to which the conductive surface is provided may be flat as shown or may carry corresponding longitudinal curves or ridges, provided that an average separation 's' between the surfaces is maintained to be as small as practicable. Preferably, insulating laminae 16, 17 are placed between the conductive surfaces to prevent intermittent contact causing undesirable electrical effects. Such laminae may be formed from insulating membranes or the proximate surfaces may be over-painted with conventional insulating paint.

The conductive coatings are conductively connected to the ground planes of the internal printed circuit boards (PCBs) 10, 11 by conductive means 12, 13, 14, 15. The components of the handset are maintained at a substantially constant spacing by sliding means 18, 19. Such sliding means may be of conductive or non-conductive parts and may accommodate a spring or over-centre action to provide smooth and positive action; their design is well known and is not constrained by the application of the present invention.

As shown in Figure 3, to increase the space available for the electrical interconnection between the handset components, the central region of one or both components 1, 2 may optionally be provided with one or more recesses 20 to provide increased accommodation for the flexible connection 5.

Three different antennas were optimised in turn in place on one handset. In each case the optimisation was carried out in the open position and the input VSWR was measured in both open and closed states. The terminal efficiency of the same test phone was then measured in a SATIMO STARGATE 64 spherical near-field chamber with the phone in both open and closed states with each of the three antennas fitted in turn.

Three ceramic hybrid antennas with different radiator geometries were optimised to give optimum return loss in the phone open configuration. The resonant frequencies of the antennas were then offset slightly to balance the performance at the band edges in the open and closed states. The bandwidth achieved for all the configurations was very similar. In the closed state there is a shift in the frequency of the optimum match in the 900MHz band, while in the 1800MHz band closing the phone creates a much wider match bandwidth and the match in the DSC band is relatively unchanged.

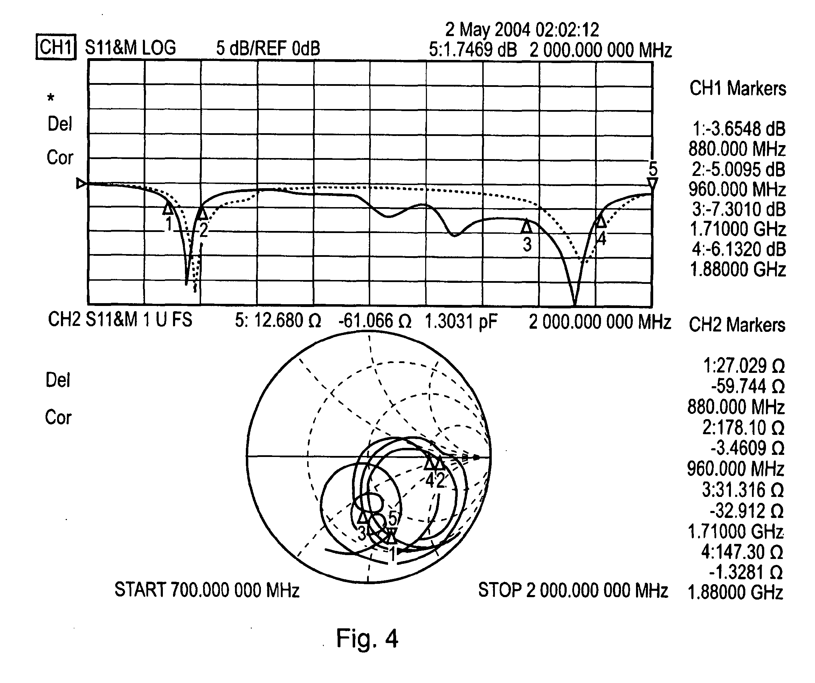

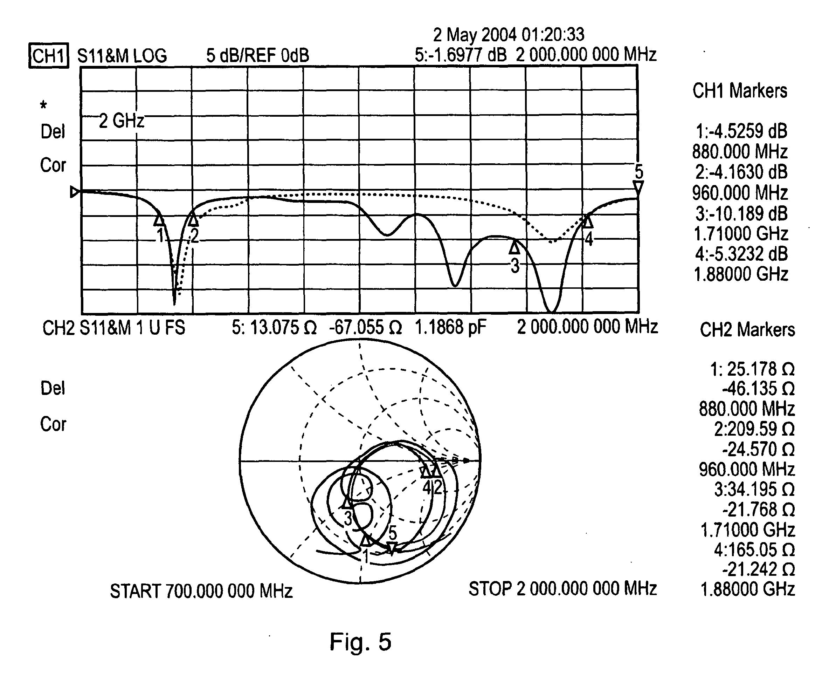

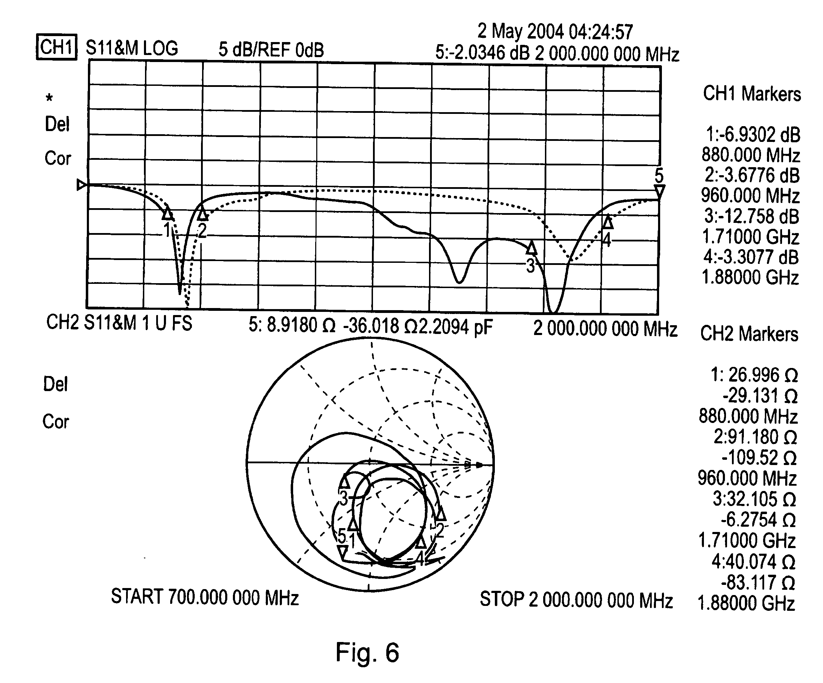

The return loss/frequency curves for the three antennas are shown in Figures 4, 5 and 6. Each Figure shows the results with the phone in the open and closed positions.

The antennas display very similar return loss/frequency characteristics. The frequency of optimum impedance match in the GSM900 band falls when the handset is closed, while at the 1800MHz the match is less affected and a variety of additional resonances appear between the two operating frequency bands.

The optimisation of the antenna geometries started from very different points, so it is interesting that all the results are so similar. When the handset is closed the return loss in the 900MHz band is greatest at the low end of the band, so it would be expected that the efficiency will be highest at the lower end of the band, while in the open state it would be expected to be greatest at the high end of the band

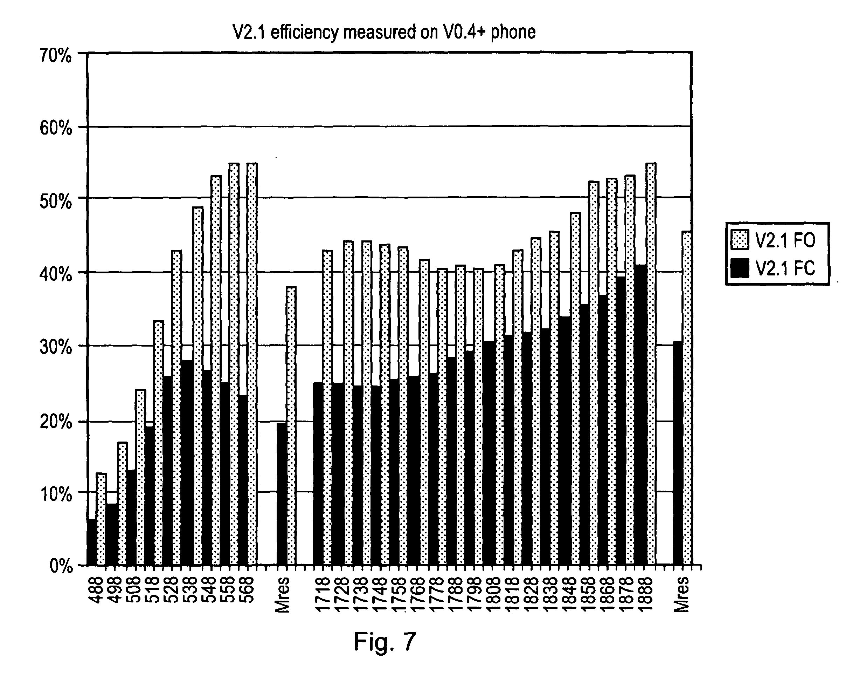

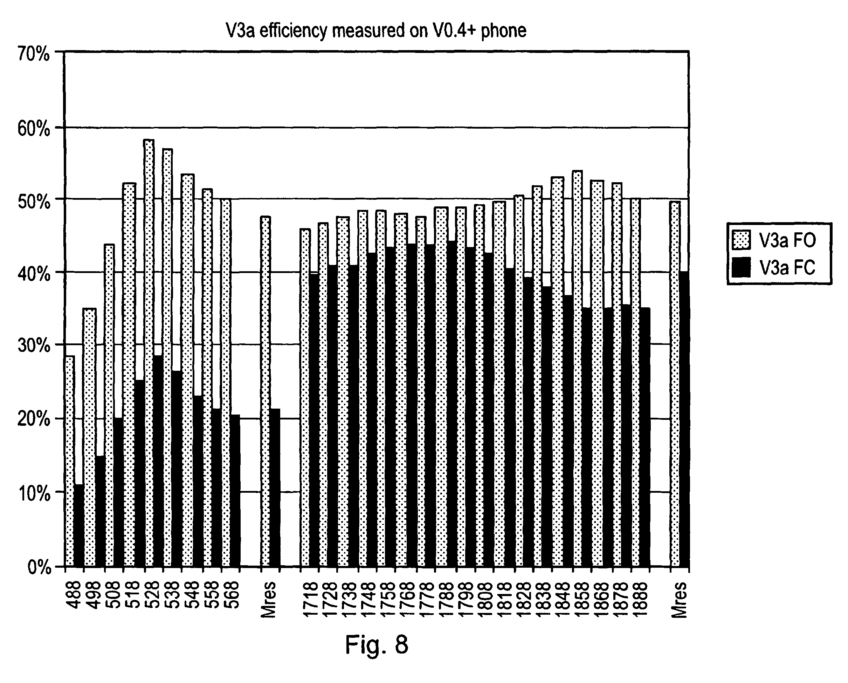

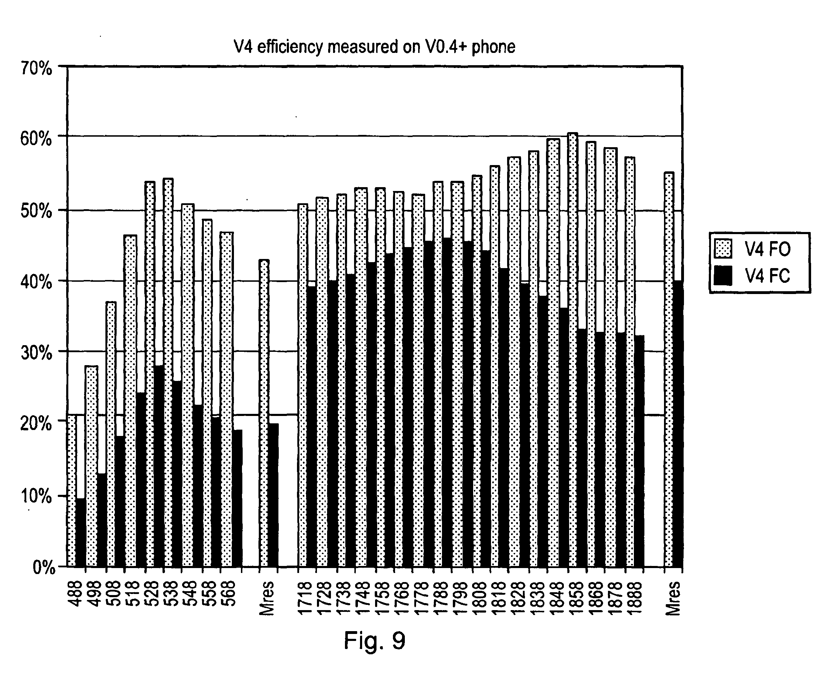

The results of the efficiency measurements are shown in Figures 7, 8 and 9. A sleeve balun of an appropriate length was fitted close to the handset for all measurements to reduce stray radiation from connecting cables. The terminal efficiency includes the reflection loss at the antenna terminals and would be expected to be lower for conditions in which the antenna input return loss is small. In each case the result with the handset open is shown in light grey, while that in the closed position is shown in dark grey.

### There are several very interesting features of these results:

Version 2.1 has very different characteristics in the 1800MHz band than the other two antennas, but in the 900MHz band the efficiency results and the efficiency/frequency relationships are strikingly similar.

The return loss results (Figure 4) confirm that the best match in the closed position is at the bottom of the 900MHz band, yet the efficiency is always lowest at this frequency.

The mean return loss in the 900MHz band is very similar in open and closed positions, yet the efficiency in the closed position is very much lower.

These results suggest that the efficiency results in the 900MHz band are a function of the behaviour of the phone rather than of the antenna.

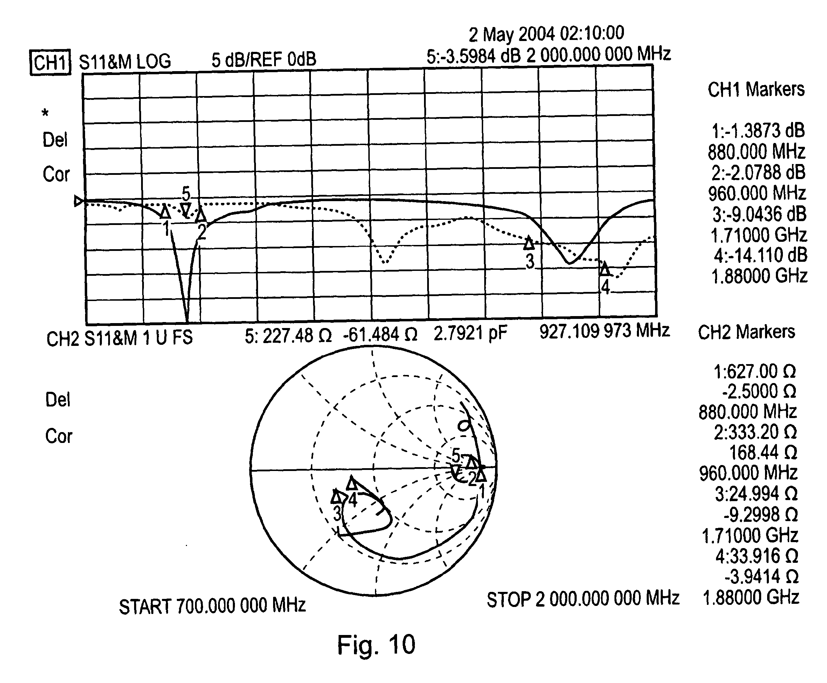

To examine this possibility the antenna with the highest mean efficiency (v3.2) was re-fitted to the handset and the end of the linking flexible PCB (the electrically conductive connector) was disconnected from the rear of the main PCB in the handset. The return loss was then re-measured with the result shown in Figure 10.

It can be seen that the match in the 900MHz band almost completely disappears when the flexible PCB is disconnected. This clearly indicates that the match at 900MHz is influenced very heavily by currents flowing in the flexible PCB, and the poor efficiency in the 900MHz band suggests that these currents mostly contribute loss.

In conclusion, it has been demonstrated that the interconnections between the components of a slider phone handset have a major effect on the efficiency which can be achieved.

The preferred features of the invention are applicable to all aspects of the invention and may be used in any possible combination.

Throughout the description and claims of this specification, the words "comprise" and "contain" and variations of the words, for example "comprising" and "comprises", mean "including but not limited to", and are not intended to (and do not) exclude other components, integers, moieties, additives or steps.

## Claims

1. A mobile telephone handset having a casing comprising first (1) and second (2) components that slide relative to each other between a closed and an open configuration of the handset, wherein the first and second components (1, 2) are interconnected by an electrically conductive connector (5), and wherein facing surfaces of the first and second components are provided with electrically conductive surfaces or coatings (6, 7, 8, 9) that define an additional capacitive radio frequency path between the first and second components.

2. A handset as claimed in claim 1, wherein an external side of at least one of said facing surfaces is provided with an electrically conductive surface or coating.

3. A handset as claimed in claim 2, wherein the electrically conductive surface or coating is provided with an insulating coating or layer.

4. A handset as claimed in any preceding claim, wherein an internal side of at least one of said facing surfaces is provided with an electrically conductive surface or coating.

5. A handset as claimed in any preceding claim, wherein the conductive surfaces or coatings are not provided at a location of the electrically conductive connector.

6. A handset as claimed in any preceding claim, wherein the conductive surfaces or coatings (6, 7, 8, 9) are electrically grounded.

7. A handset as claimed in claim 6, wherein the conductive surfaces or coatings (6, 7, 8, 9) are electrically connected to an electrical groundplane or ground connector provided in one or other or both of the handset components.

8. A handset as claimed in any one of claims 2 to 7, wherein the conductive surfaces or coatings are smooth.

9. A handset as claimed in any one of claims 2 to 7, wherein at least one of the conductive surfaces or coatings is grooved or ridged.

10. A handset as claimed in any one of claims 2 to 9, wherein the conductive surfaces or coatings are provided on spaced apart regions of each handset component.

11. A handset as claimed in claim 10, wherein the spaced apart regions are located on either side of a central sliding mechanism.

12. A handset as claimed in any preceding claim, wherein the first and second handset components are configured to slide relative to each other along a single longitudinal axis.

13. A handset as claimed in any one of claims 1 to 11, wherein the first and second handset components are configured to slide rotatably about an axis of rotation.

## Patentansprüche

1. Mobiltelefon-Handgerät mit einem Gehäuse, das eine erste (1) und eine zweite (2) Komponente aufweist, die relativ zueinander zwischen einer geschlossenen und einer offenen Konfiguration des Handgeräts bewegbar sind, wobei die erste und die zweite Komponente (1, 2) über einen elektrisch leitenden Verbinder (5) miteinander verbunden sind, und wobei einander zugewandte Flächen der ersten und der zweiten Komponente mit elektrisch leitenden Flächen oder Beschichtungen (6, 7, 8, 9) versehen sind, die einen zusätzlichen kapazitiven Hochfrequenzpfad zwischen der ersten und der zweiten Komponente bilden.

2. Handgerät nach Anspruch 1, wobei eine äußere Seite von zumindest einer der einander zugewandten Flächen mit einer elektrisch leitenden Fläche oder Beschichtung versehen ist.

3. Handgerät nach Anspruch 2, wobei die elektrisch leitende Fläche oder Beschichtung mit einer Isolationsbeschichtung oder -schicht versehen ist.

4. Handgerät nach einem der vorhergehenden Ansprüche, wobei eine innere Seite von zumindest einer der einander zugewandten Flächen mit einer elektrisch leitenden Fläche oder Beschichtung versehen ist.

5. Handgerät nach einem der vorhergehenden Ansprüche, wobei die leitenden Flächen oder Beschichtungen nicht an einem Ort vorgesehen sind, wo der elektrisch leitende Verbinder ist.

6. Handgerät nach einem der vorhergehenden Ansprüche, wobei die leitenden Flächen oder Beschichtungen (6, 7, 8, 9) elektrisch geerdet sind.

7. Handgerät nach Anspruch 6, wobei die leitenden Flächen oder Beschichtungen (6, 7, 8, 9) elektrisch mit einer elektrischen Masseebene oder einem Masseverbinder verbunden sind, der in einer oder der anderen oder beiden der Handgerät-Komponenten vorgesehen ist.

8. Handgerät nach einem der Ansprüche 2 bis 7, wobei die leitenden Flächen oder Beschichtungen glatt sind.

9. Handgerät nach einem der Ansprüche 2 bis 7, wobei zumindest die leitenden Flächen oder Beschichtungen genutet oder verschweißt sind.

10. Handgerät nach einem der Ansprüche 2 bis 9, wobei die leitenden Flächen oder Beschichtungen auf zueinander beabstandeten Bereichen der Handgerät-Komponenten vorgesehen sind.

11. Handgerät nach Anspruch 10, wobei die zueinander beabstandeten Bereiche auf einer Seite eines zentralen Gleitmechanismus platziert sind.

12. Handgerät nach einem der vorhergehenden Ansprüche, wobei die erste und die zweite Handgerät-Komponente konfiguriert sind, um relativ zueinander entlang einer einzelnen Längsachse zu gleiten.

13. Handgerät nach einem der Ansprüche 1 bis 11, wobei die erste und die zweite Handgerät-Komponente konfiguriert sind, um drehbar um eine Rotationsachse zu gleiten.

## Revendications

1. Combiné de téléphone mobile ayant un boîtier comprenant un premier (1) et un second (2) composants qui coulissent l'un par rapport à l'autre entre une configuration fermée et une configuration ouverte du combiné, dans lequel les premier et second composants (1, 2) sont interconnectés par un connecteur électroconducteur (5), et dans lequel des surfaces en vis-à-vis des premier et second composants sont pourvues de surfaces ou de revêtements électroconducteurs (6, 7, 8, 9) qui définissent un trajet de radiofréquence capacitive supplémentaire entre les premier et second composants.

2. Combiné selon la revendication 1, dans lequel un côté externe d'au moins une desdites surfaces en vis-à-vis est pourvu d'une surface ou d'un revêtement électroconducteur.

3. Combiné selon la revendication 2, dans lequel la surface ou le revêtement électroconducteur est pourvu d'un revêtement ou d'une couche isolante.

4. Combiné selon l'une quelconque des revendications précédentes, dans lequel un côté interne d'au moins une desdites surfaces en vis-à-vis est pourvu d'une surface ou d'un revêtement électroconducteur.

5. Combiné selon l'une quelconque des revendications précédentes, dans lequel les surfaces ou les revêtements conducteurs ne sont pas prévus à un endroit du connecteur électroconducteur.

6. Combiné selon l'une quelconque des revendications précédentes, dans lequel les surfaces ou les revêtements conducteurs (6, 7, 8, 9) sont électriquement mis à la terre.

7. Combiné selon la revendication 6, dans lequel les surfaces ou les revêtements conducteurs (6, 7, 8, 9) sont raccordés électriquement à un plan de masse électrique ou à un raccord de mise à la terre prévu dans l'un ou l'autre des composants du combiné, ou dans les deux.

8. Combiné selon l'une quelconque des revendications 2 à 7, dans lequel les surfaces ou les revêtements conducteurs sont lisses.

9. Combiné selon l'une quelconque des revendications 2 à 7, dans lequel au moins l'une des surfaces conductrices ou l'un des revêtements conducteurs est rainuré ou strié.

10. Combiné selon l'une quelconque des revendications 2 à 9, dans lequel les surfaces ou les revêtements conducteurs sont prévus sur des régions espacées de chaque composant de combiné.

11. Combiné selon la revendication 10, dans lequel les régions espacées sont situées d'un côté ou de l'autre d'un mécanisme central coulissant.

12. Combiné selon l'une quelconque des revendications précédentes, dans lequel les premier et second composants de combiné sont configurés pour coulisser l'un par rapport à l'autre le long d'un axe longitudinal unique.

13. Combiné selon l'une quelconque des revendications 1 à 11, dans lequel les premier et second composants de combiné sont configurés pour coulisser en rotation autour d'un axe de rotation.
